# EUROPEAN PATENT APPLICATION

(11) **EP 4 656 290 A1**
(43) Date of publication of application: **03.12.2025**
(21) Application number: 24747360.6
(22) Date of filing: 25.01.2024
(51) Int. Cl.: B01J 31/22, C01C 1/04

(54) **METHOD FOR PRODUCING NITROGENATED COMPOUND**

(30) Priority: 25.01.2023 JP 2023009529
(71) Applicant: Idemitsu Kosan Co.,Ltd., Tokyo 100-8321 (JP); The University of Tokyo, Bunkyo-ku, Tokyo 113-8654 (JP); Kyushu University, National University Corporation, Nishi-ku Fukuoka-shi Fukuoka 819-0395 (JP)
(72) Inventor: ISHITOBI Yuma, Tokyo 100-8321 (JP); NISHIBAYASHI Yoshiaki, Tokyo 113-8654 (JP); ARASHIBA Kazuya, Tokyo 113-8654 (JP); YOSHIZAWA Kazunari, Fukuoka-shi, Fukuoka 819-0395 (JP); EGI Akihito, Fukuoka-shi, Fukuoka 819-0395 (JP)
(74) Representative: Gille Hrabal Partnerschaftsgesellschaft mbB Patentanwälte
(86) International application number: PCT/JP2024/002282
(87) International publication number: WO 2024/158036

(57) **Abstract**

The present invention provides a method of producing a nitrogen-containing compound, including a step of synthesizing a nitrogen-containing compound from nitrogen and a proton source in the presence of a nitrogen-activating catalyst having a structure represented by any one of the following formulae (I-1) to (I-4): 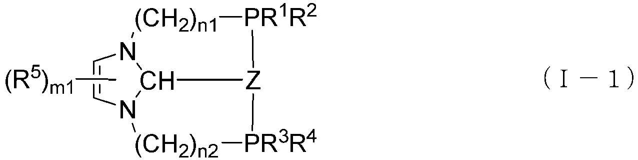 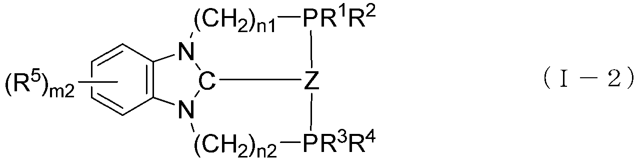 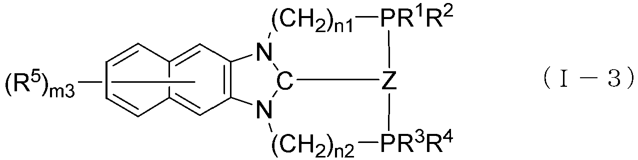 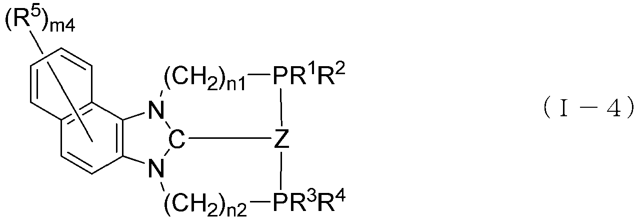 wherein R¹ to R⁵, n1, n2, ml, m2, m3, m4, and Z are as defined in Description.

## Description

### Technical Field

The present invention relates to a method of producing a nitrogen-containing compound.

### Background Art

Ammonia is an important chemical raw material used as a basic material for a fertilizer and a chemical product, and in recent years, utilization thereof for co-firing in coal-fired power generation and as an energy carrier has received attention.

Ammonia has hitherto been produced by the Haber-Bosch process. The Haber-Bosch process is a method of producing ammonia by causing a nitrogen gas and a hydrogen gas to react with each other in the presence of an iron-based catalyst.

However, the Haber-Bosch process is a method of synthesizing ammonia under high temperature and high pressure, and hence consumes a large amount of energy and requires a large apparatus formed of a special material. Further, there is a problem in that a large amount of carbon dioxide serving as a greenhouse gas is emitted when a hydrogen gas is obtained from a natural gas containing methane (CH₄) as a main component.

Accordingly, it is desired to develop a method of producing ammonia from nitrogen and water under mild reaction conditions.

In PTL 1, as an invention of producing ammonia from nitrogen molecules at low cost, there is a disclosure of a method of producing ammonia from nitrogen molecules in the presence of a catalyst, a reducing agent, and a proton source, in which a specific molybdenum complex is used.

In PTL 2, as an invention for further improving the production amount of ammonia, there is a disclosure of a method of producing a nitrogen-containing compound including a step of synthesizing a nitrogen-containing compound from nitrogen and a proton source in the presence of a nitrogen-activating catalyst and a reducing agent, and at the same time, reducing the reducing agent oxidized in the synthesis reaction of the nitrogen-containing compound by an electrolysis method.

### Citation List

### Patent Literature

PTL 1: WO 2019/168093 A1
PTL 2: WO 2022/230898 A1

### Summary of Invention

### Technical Problem

An object of the present invention is to provide a method of producing a nitrogen-containing compound, in which the productivity of the nitrogen-containing compound is further improved. The term "productivity" as used herein refers to the degree of an amount of the nitrogen-containing compound produced by the method of producing a nitrogen-containing compound.

### Solution to Problem

The inventors of the present invention have made extensive investigations to achieve the object, and as a result, have found that the productivity of the nitrogen-containing compound can be improved by using a catalyst having a specific structure.

The present invention includes the following aspects.
[1] A method of producing a nitrogen-containing compound, including a step of synthesizing a nitrogen-containing compound from nitrogen and a proton source in the presence of a nitrogen-activating catalyst having a structure represented by any one of the following formulae (I-1) to (I-4): 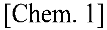 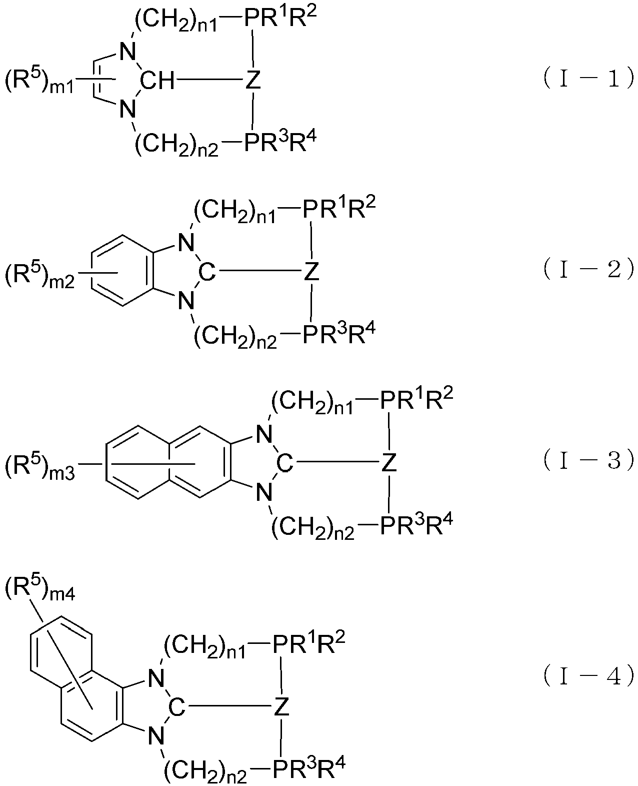
   wherein R¹ to R⁴ each independently represent an alkyl group having 1 to 10 carbon atoms, R⁵ represents a phenyl group or a naphthyl group that may have one or more substituents selected from an alkyl group having 1 to 6 carbon atoms, an alkoxy group having 1 to 6 carbon atoms, a hydroxy group, a halogen atom, and a perfluoromethyl group (-CF₃), n1 and n2 each independently represent an integer of from 1 to 3, m1 represents 1 or 2, m2 represents an integer of from 1 to 4, m3 and m4 each represent an integer of from 1 to 6, and Z represents a structure represented by the following formula (i) or (ii): 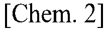 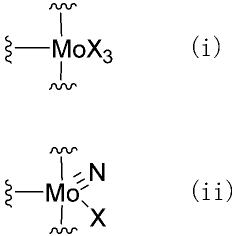
   wherein X represents a halogen atom, and the wavy line represents a bond to an adjacent atom.
[2] The production method according to Item [1], wherein R⁵ represents a phenyl group or a naphthyl group that may have one or more substituents selected from a halogen atom and a perfluoromethyl group (-CF₃).
[3] The production method according to Item [1] or [2], wherein the nitrogen-activating catalyst is a nitrogen-activating catalyst having a structure represented by the formula (I-1) or (I-2).
[4] The production method according to any one of Items [1] to [3], wherein the nitrogen-containing compound is ammonia.
[5] The production method according to any one of Items [1] to [4], wherein the step of synthesizing the nitrogen-containing compound is performed further in the presence of a reducing agent.
[6] The production method according to any one of Items [1] to [4], wherein the step of synthesizing the nitrogen-containing compound is performed under an electrochemical reduction reaction.
[7] The production method according to any one of Items [1] to [6], wherein the nitrogen-activating catalyst is a nitrogen-activating catalyst having a structure represented by any one of the following formulae: 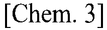 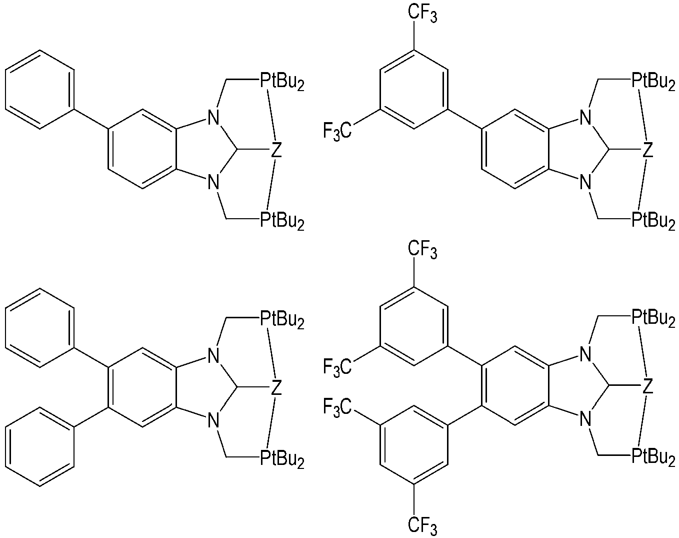 wherein Z is the same as that described above, and tBu represents a tert-butyl group.
[8] An apparatus for producing a nitrogen-containing compound by the production method of any one of Items [1] to [7], the apparatus including the nitrogen-activating catalyst.

### Advantageous Effects of Invention

According to the present invention, the method of producing a nitrogen-containing compound, in which the productivity of the nitrogen-containing compound is further improved, can be provided.

### Brief Description of Drawings

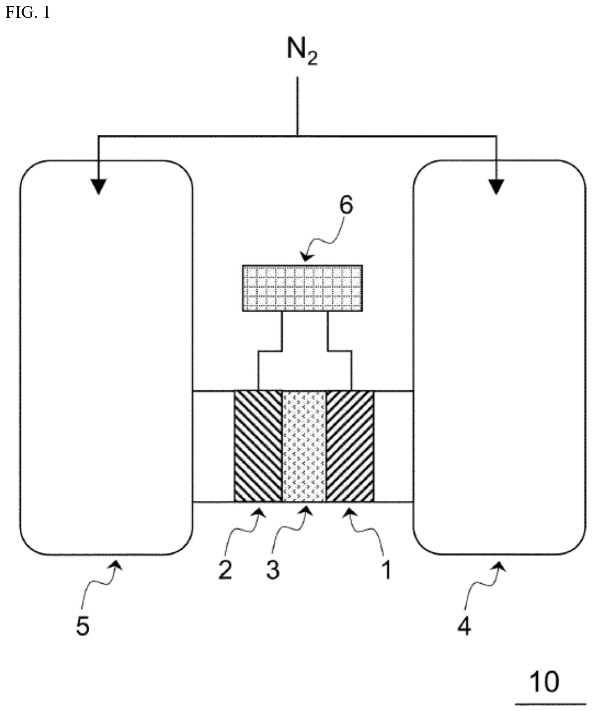

[Fig. 1] Fig. 1 is a schematic view for illustrating an example of a cell for electrolysis.

### Description of Embodiments

### [Method of producing Nitrogen-containing Compound]

A method of producing a nitrogen-containing compound of the present invention includes a step of synthesizing a nitrogen-containing compound from nitrogen and a proton source in the presence of a nitrogen-activating catalyst having a structure represented by any one of the following formulae (I-1) to (I-4): 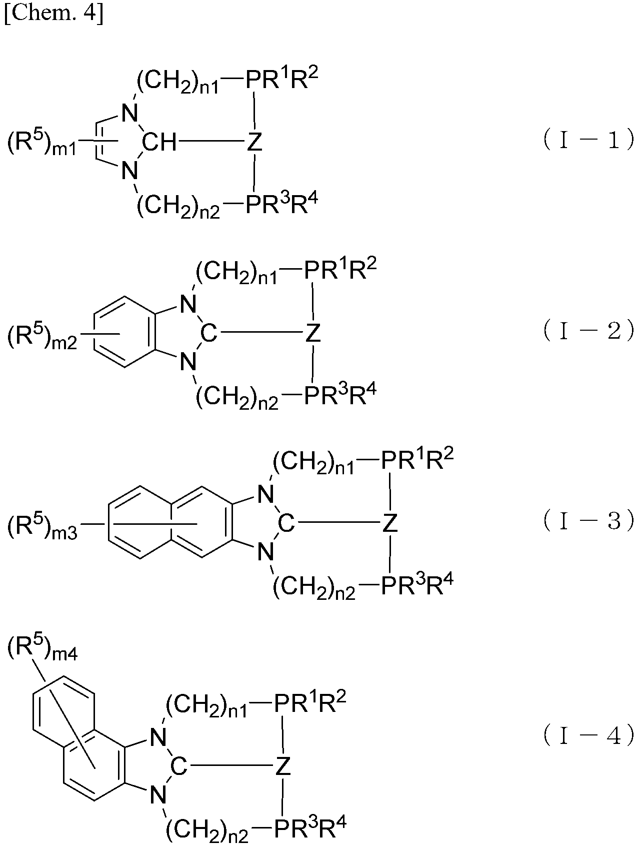
wherein R¹ to R⁴ each independently represent an alkyl group having 1 to 10 carbon atoms, R⁵ represents a phenyl group or a naphthyl group that may have one or more substituents selected from an alkyl group having 1 to 6 carbon atoms, an alkoxy group having 1 to 6 carbon atoms, a hydroxy group, a halogen atom, and a perfluoromethyl group (-CF₃), n1 and n2 each independently represent an integer of from 1 to 3, m1 represents 1 or 2, m2 represents an integer of from 1 to 4, m3 and m4 each represent an integer of from 1 to 6, and Z represents a structure represented by the following formula (i) or (ii): 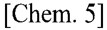 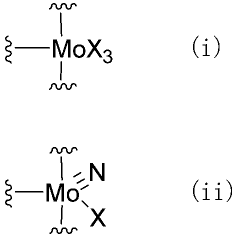
wherein X represents a halogen atom, and the wavy line represents a bond to an adjacent atom.

### <Nitrogen-containing Compound>

Examples of the nitrogen-containing compound to be produced by the method of producing a nitrogen-containing compound of the present invention include ammonia and hydrazine, and ammonia is preferred.

### <Synthesis of Nitrogen-containing Compound>

The method of producing a nitrogen-containing compound of the present invention includes the step of synthesizing the nitrogen-containing compound from nitrogen and the proton source in the presence of the nitrogen-activating catalyst having the above-mentioned structure.

The synthesis of the nitrogen-containing compound is preferably performed further in the presence of a reducing agent to be described later, or under an electrochemical reduction reaction.

The method of producing a nitrogen-containing compound of the present invention can advance the synthesis reaction of the nitrogen-containing compound under mild reaction conditions, and hence consumes a small amount of energy and can omit a large apparatus formed of a special material. Accordingly, the method can be said to be excellent in industrial productivity.

### <Nitrogen>

A normal-pressure nitrogen gas is preferably used as nitrogen. The nitrogen gas is inexpensive, and hence may be used in a large excess relative to any other reagent.

### <Proton Source>

Examples of the proton source include: water; alcohols, such as methanol, ethanol, propanol, butanol, trifluoroethanol, phenol, and ethylene glycol; a hydrogenated product of lutidine; a hydrogenated product of picoline; and a hydrogenated product of collidine, and water is preferred.

When water is used as the proton source, a step of obtaining a hydrogen gas from a natural gas containing methane (CH₄) as a main component, as in the related-art Haber-Bosch process, can be omitted, and hence the emission of carbon dioxide serving as a greenhouse gas can be significantly reduced.

### <Nitrogen-activating Catalyst>

The nitrogen-activating catalyst in the method of producing a nitrogen-containing compound of the present invention has a structure represented by any one of the following formulae (I-1) to (I-4): 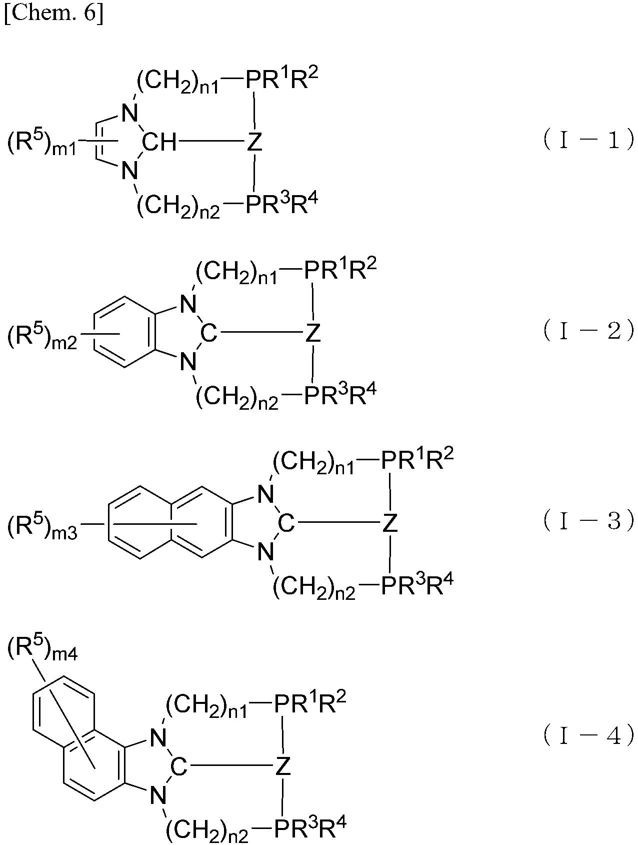
wherein R¹ to R⁴ each independently represent an alkyl group having 1 to 10 carbon atoms, R⁵ represents a phenyl group or a naphthyl group that may have one or more substituents selected from an alkyl group having 1 to 6 carbon atoms, an alkoxy group having 1 to 6 carbon atoms, a hydroxy group, a halogen atom, and a perfluoromethyl group (-CF₃), n1 and n2 each independently represent an integer of from 1 to 3, m1 represents 1 or 2, m2 represents an integer of from 1 to 4, m3 and m4 each represent an integer of from 1 to 6, and Z represents a structure represented by the following formula (i) or (ii): 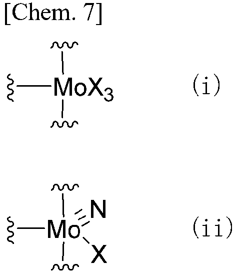
wherein X represents a halogen atom, and the wavy line represents a bond to an adjacent atom.

In another aspect of the present invention, the nitrogen-activating catalyst has a structure represented by the following formula (I-5): 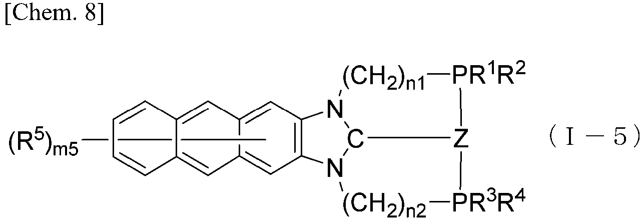 wherein R¹ to R⁵, Z, n1, and n2 are the same as those described above, and m5 represents an integer of from 1 to 8.

The nitrogen-activating catalysts having the structures represented by the formulae (I-1) to (I-4) are each an organometallic complex containing molybdenum (Mo) as a central metal and a PCP-type pincer ligand.

The above-mentioned nitrogen-activating catalyst has activity capable of cleaving the triple bond of a nitrogen molecule.

In the PCP-type pincer ligand, three donor atoms positioned on the same plane, that is, two phosphorus atoms and a carbon atom for forming a carbene, are coordinated to molybdenum.

When Z represents the structure represented by the formula (i), three halogen atoms each form a sigma bond with Mo. In addition, in this case, the nitrogen-activating catalyst is a trivalent Mo complex.

When Z represents the structure represented by the formula (ii), one halogen atom forms a sigma bond with Mo, and one nitrogen atom forms a triple bond with Mo. In this case, the nitrogen-activating catalyst is a tetravalent Mo complex.

R¹ to R⁴ each independently represent an alkyl group having 1 to 10 carbon atoms, preferably an alkyl group having 1 to 6 carbon atoms. The alkyl group may be linear or branched. Specific examples of the alkyl group include a methyl group, an ethyl group, a n-propyl group, an isopropyl group, a n-butyl group, an isobutyl group, a s-butyl group, a t-butyl group, a n-hexyl group, a thexyl group (a t-hexyl group, 2,3-dimethylbutan-2-yl), and an adamantyl group. R¹ to R⁴ each represent preferably a branched alkyl group with large steric hindrance, more preferably a t-butyl group or a thexyl group. It is still more preferred that R¹ to R⁴ all represent t-butyl groups, or R¹ to R⁴ all represent thexyl groups.

m1 R⁵s are bonded to an imidazole skeleton in the formula (I-1). m1 represents 1 or 2.

m2 R⁵s are bonded to a benzene skeleton in the formula (I-2). m2 represents an integer of from 1 to 4.

m3 and m4 R⁵s are bonded to naphthalene skeletons in the formula (I-3) and the formula (I-4), respectively. m3 and m4 each represent an integer of from 1 to 6.

m5 R5s are bonded to an anthracene skeleton in the formula (I-5). m5 represents an integer of from 1 to 8.

The bonding positions of R⁵s to the benzene skeleton in the formula (I-2), the naphthalene skeletons in the formula (I-3) and the formula (I-4), and the anthracene skeleton in the formula (I-5) are not limited.

R⁵ represents a phenyl group or a naphthyl group that may have one or more substituents selected from an alkyl group having 1 to 6 carbon atoms, an alkoxy group having 1 to 6 carbon atoms, a hydroxy group, a halogen atom, and a perfluoromethyl group (-CF₃).

The alkyl group having 1 to 6 carbon atoms is preferably an alkyl group having 1 to 3 carbon atoms, more preferably a methyl group or an ethyl group. The alkoxy group having 1 to 6 carbon atoms has an alkyl group moiety that is an alkyl group having 1 to 6 carbon atoms, and the alkoxy group is preferably an alkoxy group having 1 to 3 carbon atoms, more preferably a methoxy group or an ethoxy group.

The halogen atom is a fluorine atom (F), a chlorine atom (Cl), a bromine atom (Br), or an iodine atom (I).

When R⁵ represents a phenyl group having a substituent, the number of the substituents is from 1 to 5, preferably from 1 to 3, more preferably 1 or 2. The positions of the substituents are not limited.

When R⁵ represents a naphthyl group that may have one or more substituents, the naphthyl group may be a 1-naphthyl group or a 2-naphthyl group. When R⁵ represents a naphthyl group having a substituent, the number of the substituents is from 1 to 7, preferably from 1 to 4, more preferably 1 or 2. The positions of the substituents are not limited.

When a plurality of R⁵s are present, the R⁵s may be identical to or different from each other.

Specific examples of R⁵ include groups represented by the following chemical formulae: 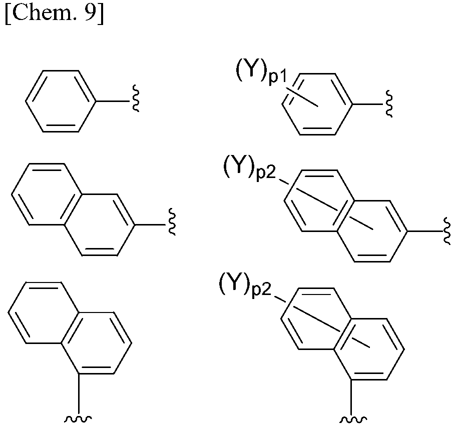 wherein Y represents a substituent selected from an alkyl group having 1 to 6 carbon atoms, an alkoxy group having 1 to 6 carbon atoms, a hydroxy group, a halogen atom, and a perfluoromethyl group (-CF₃), a plurality of Ys may be identical to or different from each other, p1 represents an integer of from 1 to 5, p2 represents an integer of from 1 to 7, and the wavy line represents a bond to an adjacent atom.

When R⁵ represents a phenyl group having a substituent, R⁵ preferably has a structure shown below: 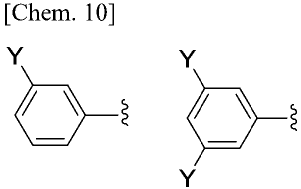 wherein Y is the same as that described above.

In one preferred aspect of the present invention, R⁵ represents a phenyl group or a naphthyl group that may have one or more substituents selected from a halogen atom and a perfluoromethyl group (-CF₃). That is, Y preferably represents a substituent selected from a halogen atom and a perfluoromethyl group (-CF₃).

In one preferred aspect of the present invention, the nitrogen-activating catalyst has a structure represented by the following formula (I-1) or (I-2): 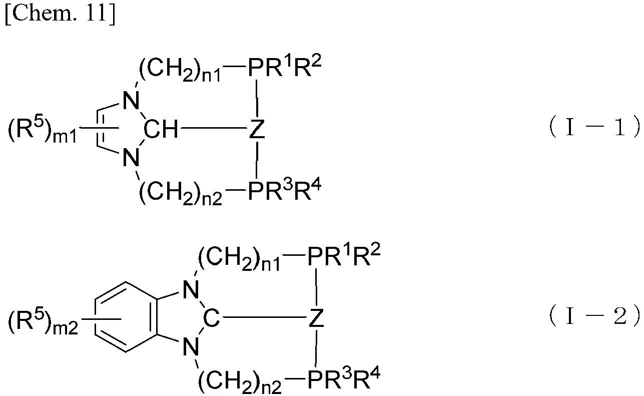
wherein R¹ to R⁴ each independently represent an alkyl group having 1 to 10 carbon atoms, R⁵ represents a phenyl group or a naphthyl group that may have one or more substituents selected from an alkyl group having 1 to 6 carbon atoms, a halogen atom, and a perfluoromethyl group (-CF₃), n1 and n2 each independently represent an integer of from 1 to 3, m1 represents 1 or 2, m2 represents an integer of from 1 to 4, and Z represents a structure represented by the following formula (i) or (ii): 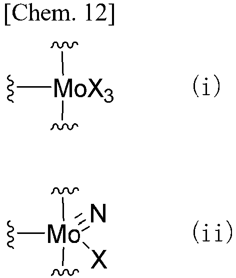
wherein X represents a halogen atom, and the wavy line represents a bond to an adjacent atom.

The nitrogen-activating catalyst preferably has a structure represented by any one of the following formulae.

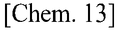

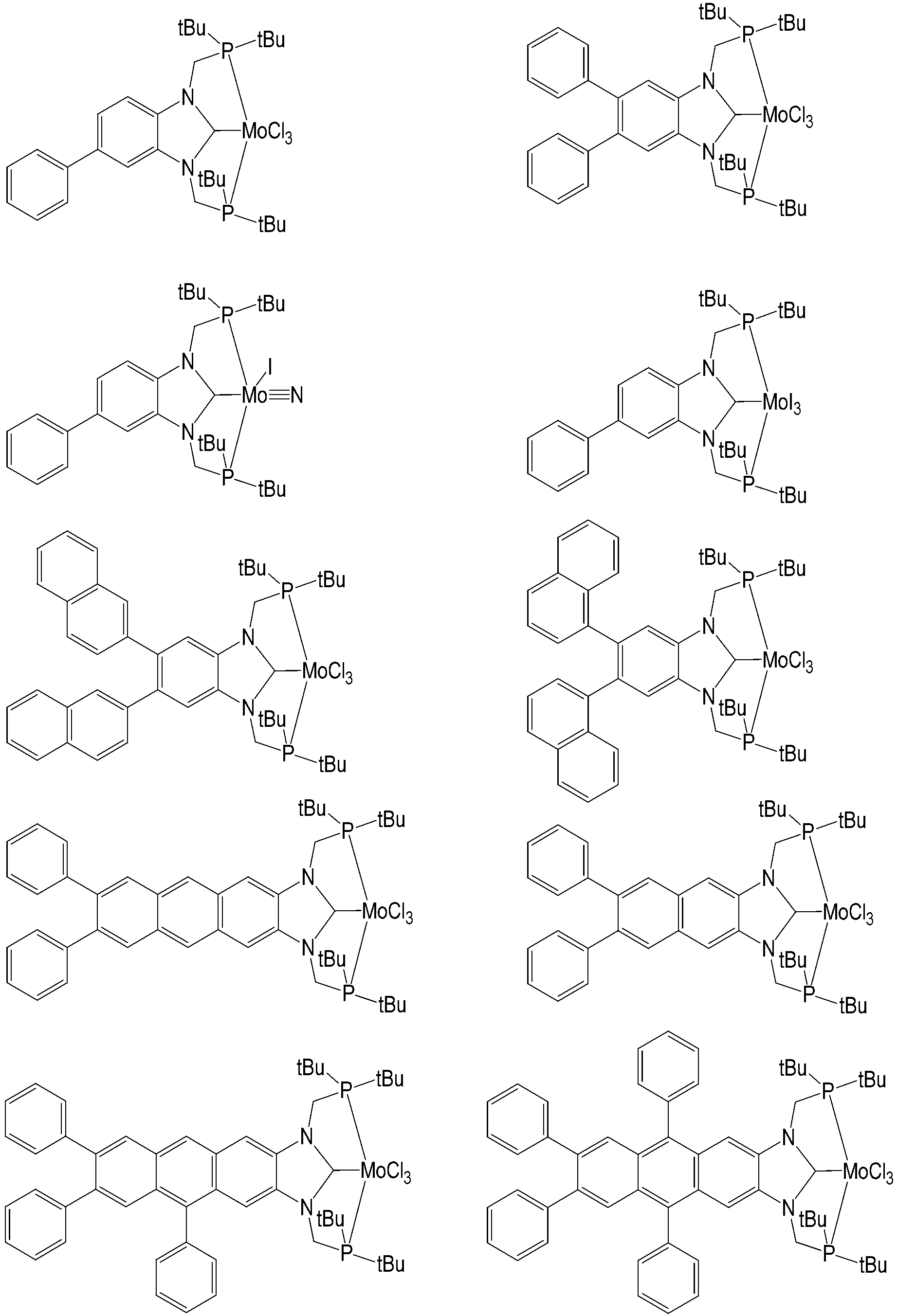

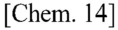

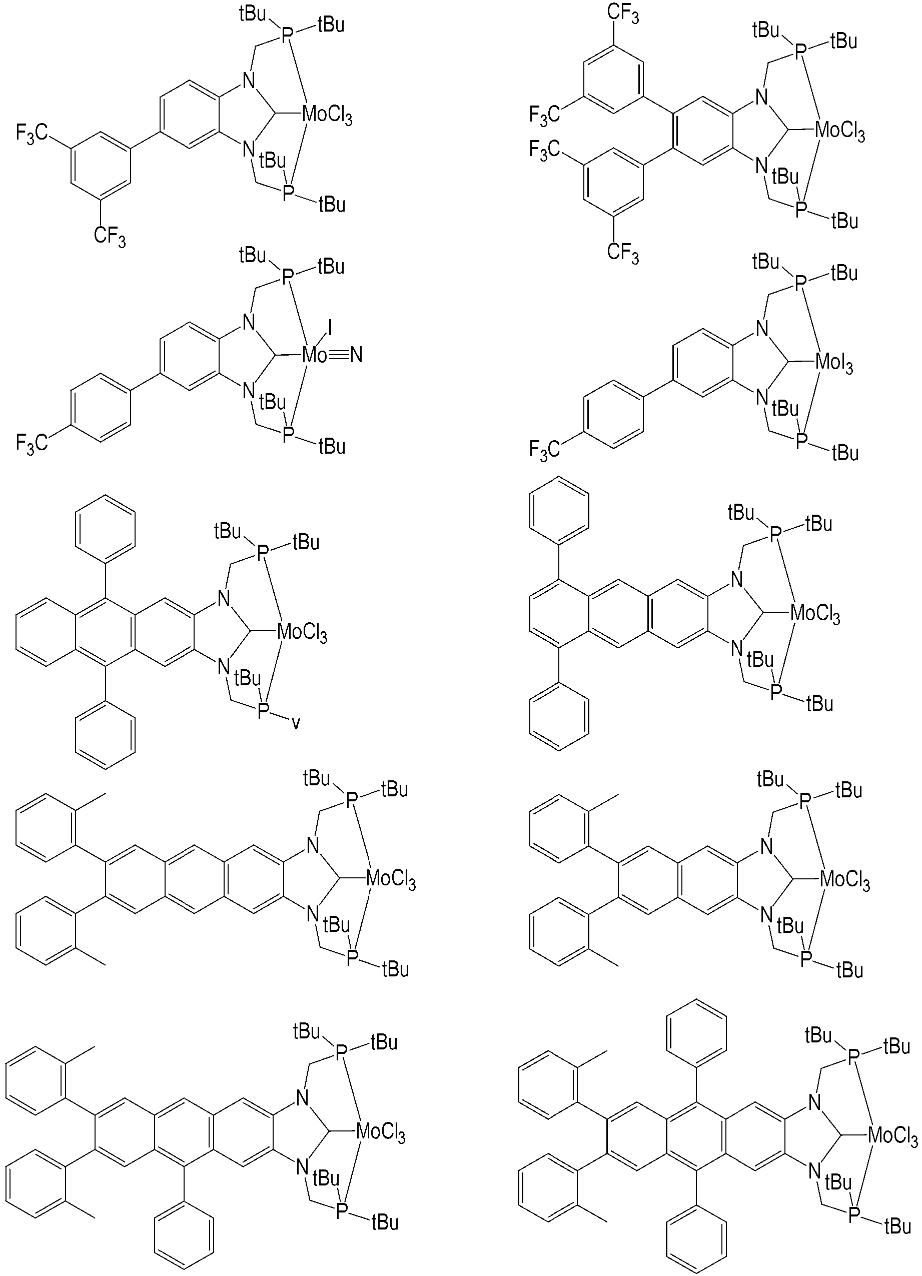

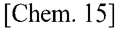

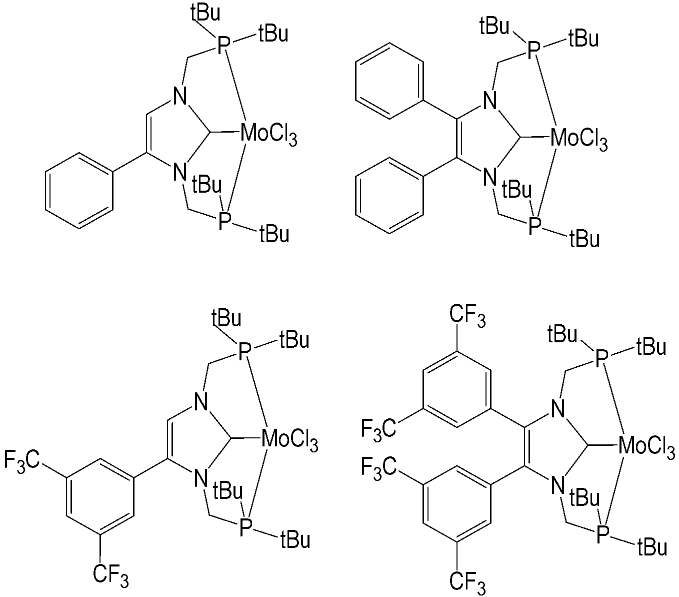

The nitrogen-activating catalyst more preferably has a structure represented by any one of the following formulae: 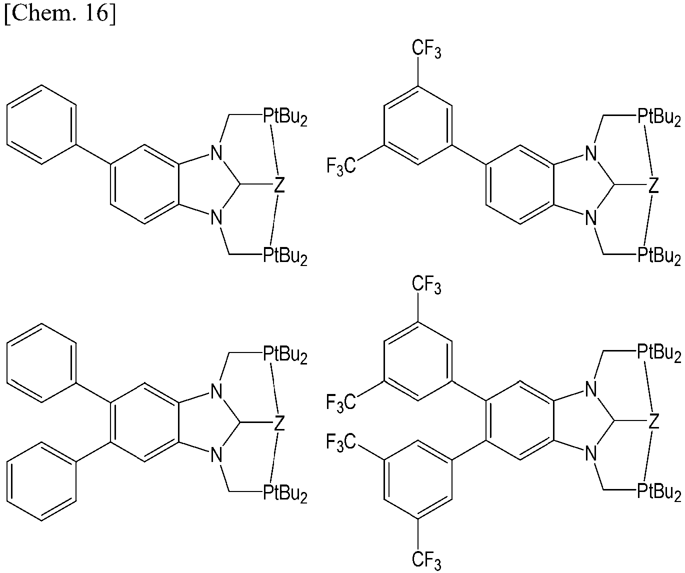 wherein Z is the same as that described above.

In the above-mentioned formulae, tBu represents a tert-butyl group.

In the method of producing a nitrogen-containing compound of the present invention, a reaction of synthesizing the nitrogen-containing compound from nitrogen and the proton source is assumed to proceed by the following mechanism.

A case in which X represents an iodine atom and ammonia is synthesized by using samarium(II) iodide as the reducing agent is described as an example. In the formulae, the pincer ligand in the nitrogen-activating catalyst is represented by L. The synthesis of ammonia is assumed to proceed as represented by the formula <1> to the formula <3>.
[Chem. 17]

<1> LMoI₃ + 2SmI₂ → LMoI + 2SmI₃

<2> 2LMoI + N₂ → LMoI···N=N···IMoL → 2LMo(I)=N

<3> LMo(I)≡N + H⁺ + e⁻ → LMo(I)=NH LMo(I)=NH + H⁺ + e⁻ → LMo(I)-NH₂ LMo(I)-NH₂ + H⁺ + e⁻ → LMo(I) + NH₃

Specifically, Mo serving as the central metal of the nitrogen-activating catalyst is reduced from trivalent to monovalent by samarium(II) iodide serving as the reducing agent (the formula <1>).

Next, nitrogen N₂ is brought into an activated state by the nitrogen-activating catalyst in a reduced state (<Formula 2>).

Then, a proton and the reducing agent sequentially react with nitrogen that has been activated on the catalyst to produce ammonia (the formula <3>).

Thus, the nitrogen triple bond of nitrogen N₂ is dissociated by the action of the nitrogen-activating catalyst and the resultant is hydrogenated to produce ammonia.

### <Reaction Conditions and the like>

According to the method of producing a nitrogen-containing compound of the present invention, the synthesis of the nitrogen-containing compound can proceed under relatively mild conditions, for example, within the ranges of -80°C or more and 100°C or less, and 0.10 MPa or more and 0.20 MPa or less. The temperature is preferably -60°C or more and 70°C or less, more preferably -40°C or more and 60°C or less.

In the method of producing a nitrogen-containing compound of the present invention, the production of the nitrogen-containing compound may be performed in a solvent. The solvent is not particularly limited, and examples thereof include a cyclic ether-based solvent, a chain ether-based solvent, a nitrile-based solvent, and a hydrocarbon-based solvent. Examples of the cyclic ether-based solvent include tetrahydrofuran (hereinafter abbreviated as "THF" or "thf") and dioxane. An example of the chain ether-based solvent is diethyl ether. Examples of the nitrile-based solvent include acetonitrile and propionitrile. Examples of the hydrocarbon-based solvent include aromatic hydrocarbons such as toluene and saturated hydrocarbons such as hexane.

### <Reducing Agent>

In one preferred aspect of the method of producing a nitrogen-containing compound of the present invention, the nitrogen-containing compound is synthesized from nitrogen and the proton source in the presence of the reducing agent.

The reaction of synthesizing the nitrogen-containing compound advantageously proceeds when the nitrogen-activating catalyst is reduced and activated by the action of the reducing agent.

A specific example of the reducing agent is at least one kind selected from the group consisting of: a lanthanoid metal(II) halide; decamethylcobaltocene; cobaltocene; and decamethylchromocene. Among them, a lanthanoid metal(II) halide is preferred, a samarium(II) halide is more preferred, and samarium(II) iodide is still more preferred. When the reduction reaction is performed by electrolysis reduction or the like, no reducing agent may be used.

When the reducing agent is used, the usage amount of the reducing agent is preferably 0.5 equivalent or more and 100,000 equivalents or less, more preferably 0.7 equivalent or more and 10,000 equivalents or less, still more preferably 1 equivalent or more and 1,000 equivalents or less with respect to 1 mol of Mo serving as the central metal of the nitrogen-activating catalyst.

### <Batch Reaction>

As a preferred aspect of the method of producing a nitrogen-containing compound of the present invention, there is given a batch reaction including loading the respective components into a vessel and subjecting the components to a reaction. Nitrogen is caused to flow in the vessel, and a solvent is loaded thereinto, followed by stirring. Thus, nitrogen is supplied from the gas phase. A gas trap containing diluted sulfuric acid is installed at an outlet for nitrogen to capture a nitrogen-containing compound to be generated as a gas. A nitrogen activator, a reducing agent, and a proton source are loaded into the vessel. Nitrogen is activated by the nitrogen activator, and the reducing agent and a proton from the proton source react therewith. The reduction reaction and the reaction with the proton may be simultaneous or sequential reactions. The reduction with the nitrogen activator and the reaction with the proton are repeated, and thus the nitrogen-containing compound is synthesized. The resultant is dissolved in the solvent and captured by the gas trap. Thus, the nitrogen-containing compound is recovered.

### <Electrochemical Reduction Reaction>

In another preferred aspect of the method of producing a nitrogen-containing compound of the present invention, a nitrogen-containing compound is synthesized from nitrogen and a proton source under an electrochemical reduction reaction.

For example, the electrochemical reduction reaction includes a step of synthesizing the nitrogen-containing compound from nitrogen and the proton source in the presence of the nitrogen-activating catalyst and the reducing agent, and at the same time, reducing the reducing agent oxidized in the synthesis reaction of the nitrogen-containing compound by an electrolysis method.

The term "at the same time" as used herein means that the step is performed in the same system. The time interval between the synthesis of the nitrogen-containing compound and the reduction of the oxidized reducing agent is preferably short.

The step may be performed in conformity with the description of WO 2022/230898 A1 given as an example.

Specifically, the nitrogen-activating catalyst is loaded into a cathode side of a cell for electrolysis, subjected to a reaction with nitrogen, and subjected to a reaction with a proton supplied from an anode side. Thus, the nitrogen-containing compound is produced. When the proton source is water and a proton-coupled electron transfer mediator is used, it is assumed that a nitrogen-containing compound such as ammonia serving as the nitrogen-containing compound is continuously generated by the mechanisms represented by the reaction formulae (1) to (6) or the reaction formulae (7) to (12).
[Chem. 18]

(1) Red+H₂O → Red-H₂O → Ox-OH+H⁺+e⁻

(2) Mo catalyst+N₂ → (Mo=N) compound

(3) (Mo=N) compound+3H⁺+3e⁻ → Mo catalyst+NH₃

(4) H₂O (anode chamber) → 1/2O₂+2H⁺+2e⁻

(5) H⁺ (anode chamber) → (diaphragm) → H⁺ (cathode chamber)

(6) Ox-OH+e⁻ (electrode)+H⁺ → Red-H₂O

or

(7) Red+H₂O → Red-H₂O → Ox-OH+H⁺+e⁻

(8) Mo catalyst+N₂ → (Mo=N) compound

(9) (Mo=N) compound+3H⁺+3e⁻ → Mo catalyst+NH₃

(10) Ox-OH+e⁻ (electrode) → Red+OH⁻

(11) OH⁻ → (diaphragm) → OH⁻(anode chamber)

(12) 4OH⁻ → O₂+2H₂O+4e⁻

The terms "Red", "Ox", and "Cat" as used herein refer to the reducing agent, the oxidized reducing agent, and the nitrogen-activating catalyst, respectively.

A proton H⁺ in the reaction represented by each of the formulae (3) and (9) may be donated from the proton source added into a cathode chamber or from an anode chamber via a diaphragm.

More specifically, in the method of producing a nitrogen-containing compound of the present invention, when, for example, the cell for electrolysis, a molybdenum complex (hereinafter also referred to as "Mocat"), samarium iodide (SmI₂), and water (H₂O) were used as a production apparatus for the nitrogen-containing compound, the nitrogen-activating catalyst, the reducing agent, and the proton source, respectively, to synthesize ammonia (NH₃), it is conceived that ammonia is continuously synthesized by reactions represented by the following formulae (A) to (C). In the description of the reaction represented by the following formula (B), the reaction represented by the following formula (A), which proceeds in a manner coupled with the NH₃ generation reaction, is included.
[Chem. 19]

(A) SmI₂+H₂O → SmI₂(H₂O) → SmI₂(OH)+H⁺+e⁻

(B) NH₃ generation reaction N₂+6SmI₂+6H₂O → (proton-coupled electron transfer (PCET) reaction+Mocat) → 2NH₃+6SmI₂(OH)

(C) Reduction reaction of samarium iodide (cathode reaction) SmI₂(OH)+e⁻ → SmI₂+OH⁻

The nitrogen-containing compound may also be produced through a step of reducing the reducing agent by an electrolysis method. The reaction apparatus, the electrode, or the solvent to be used in the reaction in this case may be freely selected.

For example, the cell for electrolysis illustrated in Fig. 1 may be used.

Specifically, for example, a proton source such as water is used for an anode vessel, titanium or a carbon-based material is used for a cathode electrode 1, and nickel or a carbon-based material is used for an anode electrode 2. A voltage from a power source 6 is applied between the electrodes. A nitrogen-activating catalyst, a reducing agent, the proton source, and a solvent are added to a cathode chamber 4. A proton supply source such as water is added to an anode chamber 5.

The nitrogen-activating catalyst reacts with a nitrogen molecule supplied to the cathode chamber 4 to activate the nitrogen molecule, a proton is supplied to the nitrogen molecule, and an electron is supplied to reduce a metal. This process is repeated to produce ammonia. When the reducing agent mediates the electron, the oxidized reducing agent is reduced by the cathode electrode 1 and reutilized.

### [Apparatus for producing Nitrogen-containing Compound]

The present invention also provides an apparatus for producing a nitrogen-containing compound.

In the apparatus for producing a nitrogen-containing compound of the present invention, a nitrogen-containing compound is produced by the above-mentioned method of producing a nitrogen-containing compound.

A specific configuration thereof is not limited as long as the configuration is such that the above-mentioned nitrogen-activating catalyst is included and the above-mentioned method of producing a nitrogen-containing compound can be performed.

For example, the above-mentioned cell for electrolysis illustrated in Fig. 1 may be included.

### Examples

The present disclosure is described in more detail below by way of Examples, but the present disclosure is not limited to these Examples.

### Production Example 1 Synthesis of Complex (1)

2.0 g of 4-bromo-1,2-diaminobenzene and 1.6 g of phenylboronic acid were caused to react with each other in 100 mL of toluene at 85°C for 48 hours in the presence of 0.15 mg of tetrakis(triphenylphosphine)palladium and 8.3 g of potassium carbonate to provide 744 mg of 4-phenyl-1,2-diaminobenzene.

510 mg of paraformaldehyde and 2.2 g of di-tert-butylphosphine were caused to react with each other at 60°C for 16 hours, and the resultant product was dissolved in 12 mL of methylene chloride. Next, the resultant was added to 740 mg of 4-phenyl-1,2-diaminobenzene obtained above, and subjected to a reaction at 60°C for 96 hours. After that, 69 mg of selenium was added thereto, and the resultant was subjected to a reaction at room temperature for 1 hour. 12 mL of triethoxymethane and 150 mg of ammonium hexafluorophosphate were added to the product, and subjected to a reaction at 120°C for 3 hours. 332 mg of tris(dimethylamino)phosphine and 10 mL of methylene chloride were added to the product, and subjected to a reaction at room temperature for 1 hour.

Further, potassium hexamethyldisilazide was caused to react with the resultant product, and then caused to react with molybdenum chloride. The resultant was purified by recrystallization to provide 209 mg of a Mo complex having a monophenylbenzimidazole-type ligand as shown below. The complex is hereinafter abbreviated as "PhPCPMoCl₃".

tBu represents a tert-butyl group.

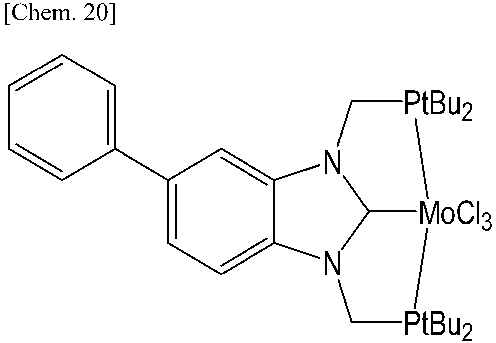

### Production Example 2 Synthesis of Complex (2)

A Mo complex shown below was obtained in the same manner as in Production Example 1 except that 3.36 g of 3,5-ditrifluoromethylphenylboronic acid was used instead of 1.6 g of phenylboronic acid. The complex is hereinafter abbreviated as "3,5-CF₃PhPCPMoCl₃".

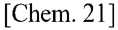

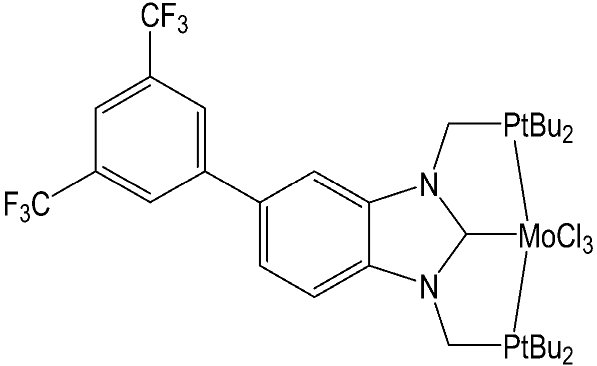

### Production Example 3 Synthesis of Complex (3)

A Mo complex shown below was obtained in the same manner as in Production Example 1 except that 2.9 g of 4,5-dibromo-1,2-diaminobenzene was used instead of 2.0 g of 4-bromo-1,2-diaminobenzene. The complex is hereinafter abbreviated as "Ph2PCPMoCl₃".

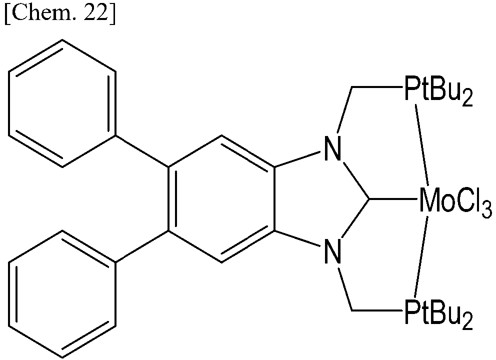

### Production Example 4 Synthesis of Complex for Comparative Example (1)

190 mg of a Mo complex shown below was obtained in the same manner as in Production Example 1 except that 430 mg of 1,2-diaminobenzene was used instead of using 4-phenyl-1,2-diaminobenzene produced in Production Example 1. The complex is hereinafter abbreviated as "PCPMoCl₃".

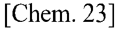

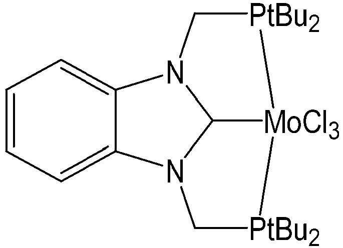

### Production Example 5 Synthesis of Complex for Comparative Example (2)

190 mg of a Mo complex having a 4-SF₅ -benzimidazole-type ligand shown below was obtained in the same manner as in Production Example 1 except that 80 mg of 4-SF₅-1,2-diaminobenzene was used instead of using 4-phenyl-1,2-diaminobenzene produced in Production Example 1. The complex is hereinafter abbreviated as "SF₅-PCPMoCl₃".

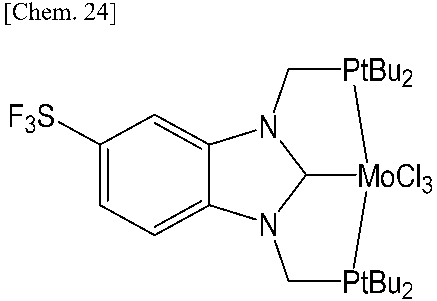

The NMR measurement results of PCP ligands for forming the Mo complexes of Production Examples 1 to 3 and 5 are shown in Table 1.

**[Table 1]**

| | ¹H NMR (CDCl₃) | | ³¹P{¹H} NMR (CDCl₃) | |
|---|---|---|---|---|
| Production Example 1 | δ | 9.56 (s, NCHN, 1H) | δ | 24.86 (s, tBu2P) |
| | | 8.08 (s, ArH, 1H) | | 24.70 (s, tBu2P) |
| | | 8.01 (d, J = 11.5 Hz, ArH, 1H) | | -143.65 (sep., PF₆⁻) |
| | | 7.84 (dd, J = 11.0 Hz, 2.0 Hz, ArH, 1H) | | |
| | | 7.62 (d, J = 8.5 Hz, ArH, 2H) | | |
| | | 7.53 (t, J = 10.0 Hz, ArH, 2H) | | |
| | | 7.46 (t, J = 9.0 Hz, ArH, 1H) | | |
| | | 4.70 (s, NCH₂P, 4H) | | |
| | | 1.25 (s, PtBu₂, 18H) | | |
| | | 1.22 (s, PtBu₂, 18H) | | |
| Production Example 2 | δ | 9.60 (s, NCHN, H) | δ | 25.62 (s, tBu2P) |
| | | 8.14 (d, J = 2.0 Hz, ArH, 1H) | | 25.00 (s, tBu2P) |
| | | 8.11 (d, J = 11.0 Hz, ArH, 1H) | | -143.73 (sep., PF₆⁻) |
| | | 8.06 (s, ArH, 2H) | | |
| | | 7.97 (s, ArH, 1H) | | |
| | | 7.87 (dd, J = 10.8 Hz, 2.0 Hz, ArH, 1H) | | |
| | | 4.71 (s, NCH₂P, 4H) | | |
| | | 1.26 (d, J = 5.0 Hz, PtBu₂, 18H) | | |
| | | 1.23 (d, J = 4.0 Hz, PtBu₂, 18H) | | |
| Production Example 3 | δ | 10.01 (s, NCHN, 1H) | δ | 24.38 (s, tBu2P) |
| | | 8.00 (s, ArH, 2H) | | -142.09 (sep., PF6-) |
| | | 7.17 (br, ArH, 4H) | | |
| | | 6.98 (br, ArH, 6H) | | |
| | | 4.60 (s, NCH2P, 4H) | | |
| | | 1.02 (s, PtBu2, 18H) | | |
| | | 0.99 (s, PtBu2, 18H) | | |
| Production Example 5 | δ | 10.00 (s, NCHN, 1H), | δ | 26.97 (s, tBu2P), |
| | | 8.74 (d, J = 2.0 Hz, ArH, 1H), | | -143.81 (sep, PF6-). |
| | | 8.35 (d, J = 9.6 Hz, ArH, 1H), | | |
| | | 8.17 (dd, J = 9.0, 2.0 Hz, ArH, 1H), | | |
| | | 4.95 (d, J = 10.4 Hz, NCH2P, 4H), | | |
| | | 1.26 (d, J = 6.4 Hz, PtBu2, 18H), | | |
| | | 1.23 (d, J = 6.4 Hz, PtBu2, 18H). | | |

### Example 1 Synthesis of Ammonia (Batch Method (1))

Under a nitrogen atmosphere, 25 nmol of the complex PhPCPMoCl₃ obtained in Example 1, 720 µmol of SmI₂, and 720 µmol of water were added to 6 mL of THF. A reaction was performed for 15 minutes to synthesize ammonia. After the reaction, the resultant was quenched with diluted sulfuric acid. KOH was added to the product liquid, and the solvent was then evaporated under reduced pressure. Thus, ammonia was obtained.

The resultant ammonia was quantified with an ion chromatogram, and it was recognized that 5,600 mol/mol of ammonia was generated with respect to 1 mol of molybdenum in the complex.

### Example 2 Synthesis of Ammonia (Batch Method (2))

Ammonia was synthesized in the same manner as in Example 1 except that 25 nmol of the complex 3,5-CF₃PhPHPMoCl₃ obtained in Production Example 2 was used.

The resultant ammonia was quantified with an ion chromatogram, and it was recognized that 7,230 mol of ammonia was generated with respect to 1 mol of molybdenum in the complex.

### Example 3 Synthesis of Ammonia (Batch Method (3))

Ammonia was synthesized in the same manner as in Example 1 except that 25 nmol of the complex Ph2PCPMoCl₃ obtained in Production Example 3 was used.

The resultant ammonia was quantified with an ion chromatogram, and it was recognized that 4,910 mol of ammonia was generated with respect to 1 mol of molybdenum in the complex.

### Comparative Example 1 Synthesis of Ammonia (Batch Method (c1))

Ammonia was synthesized in the same manner as in Example 1 except that 25 nmol of the complex PCPMoCl₃ obtained in Production Example 4 was used.

The resultant ammonia was quantified with an ion chromatogram, and it was recognized that 4,190 mol of ammonia was generated with respect to 1 mol of molybdenum in the complex.

### Comparative Example 2 Synthesis of Ammonia (Batch Method (c2))

Ammonia was synthesized in the same manner as in Example 1 except that 25 nmol of the complex SF₅-PCPMoCl₃ obtained in Production Example 5 was used.

The resultant ammonia was quantified with an ion chromatogram, and it was recognized that 1,390 mol of ammonia was generated with respect to 1 mol of molybdenum in the complex.

### Example 4 Electrolysis Synthesis of Ammonia

A cell for electrolysis illustrated in Fig. 1 (made of Pyrex glass, H-type cell) was used. An anion exchange membrane (manufactured by Astom Corporation, product name: "NEOSEPTA ASE-A-5142 membrane", thickness: 150 µm), a nickel electrode (manufactured by The Nilaco Corporation, product name: "Nickel 100 mesh"), and a titanium electrode (manufactured by Taiyo Wire Cloth Co., Ltd., product name: "Fine titanium fiber product") were used as a diaphragm, an anode electrode, and a cathode electrode of the cell, respectively.

40 mL of a 0.2 mol/L aqueous solution of potassium hydroxide was loaded into an anode chamber of the H-type cell, 0.01 mmol of the complex PhPCPMoCl₃ obtained in Production Example 1 and 0.06 mmol of SmI₂ in 40 mL of dimethoxyethane (DME) were loaded into a cathode chamber thereof, and 200 mg of tetrabutylammonium triflate (Bu₄NSO₃CF₃) and 500 mg of lithium iodide (manufactured by FUJIFILM Wako Pure Chemical Corporation) were loaded thereinto as additives.

Next, a voltage of 3.5 V was applied between the anode electrode and the cathode electrode of the cell for electrolysis, allowing an electrical current to flow for 4 hours. Thus, the synthesis reaction of ammonia was performed. 10 mL of 0.02 mol/L sulfuric acid was added to the cathode chamber to stop the reaction, and generated ammonia was quantified by ion chromatography. As a result, the generation amount was 0.06 mmol.

### Reference Signs List

1 cathode electrode
2 anode electrode
3 diaphragm
4 cathode chamber
5 anode chamber
6 power source
10 cell for electrolysis

## Claims

1. A method of producing a nitrogen-containing compound, comprising a step of synthesizing a nitrogen-containing compound from nitrogen and a proton source in the presence of a nitrogen-activating catalyst having a structure represented by any one of the following formulae (I-1) to (I-4): 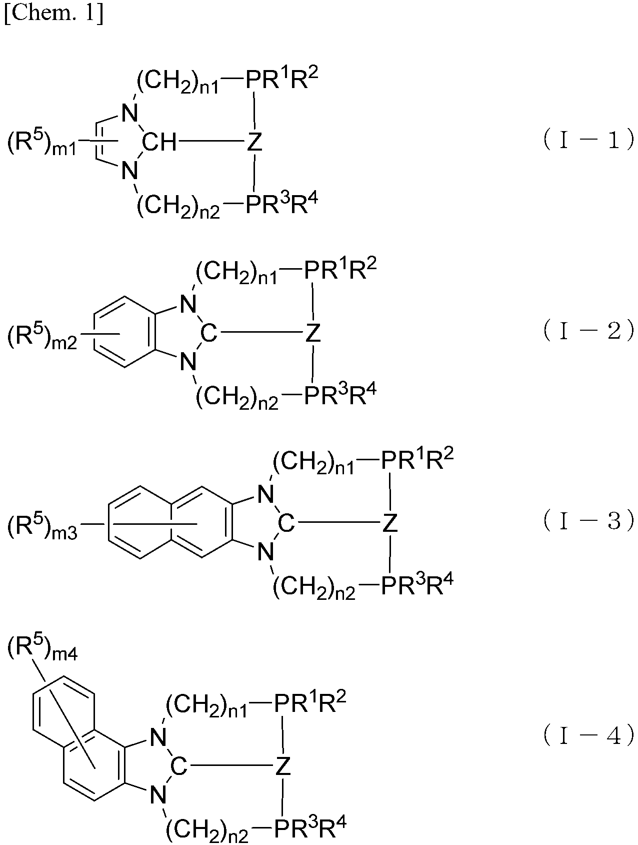
wherein R¹ to R⁴ each independently represent an alkyl group having 1 to 10 carbon atoms, R⁵ represents a phenyl group or a naphthyl group that may have one or more substituents selected from an alkyl group having 1 to 6 carbon atoms, an alkoxy group having 1 to 6 carbon atoms, a hydroxy group, a halogen atom, and a perfluoromethyl group (-CF₃), n1 and n2 each independently represent an integer of from 1 to 3, m1 represents 1 or 2, m2 represents an integer of from 1 to 4, m3 and m4 each represent an integer of from 1 to 6, and Z represents a structure represented by the following formula (i) or (ii): 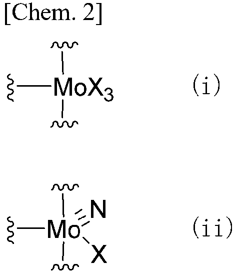
wherein X represents a halogen atom, and the wavy line represents a bond to an adjacent atom.

2. The production method according to claim 1, wherein R⁵ represents a phenyl group or a naphthyl group that may have one or more substituents selected from a halogen atom and a perfluoromethyl group (-CF₃).

3. The production method according to claim 1 or 2, wherein the nitrogen-activating catalyst is a nitrogen-activating catalyst having the structure represented by the formula (I-1) or (I-2).

4. The production method according to any one of claims 1 to 3, wherein the nitrogen-containing compound is ammonia.

5. The production method according to any one of claims 1 to 4, wherein the step of synthesizing the nitrogen-containing compound is performed further in the presence of a reducing agent.

6. The production method according to any one of claims 1 to 4, wherein the step of synthesizing the nitrogen-containing compound is performed under an electrochemical reduction reaction.

7. The production method according to any one of claims 1 to 6, wherein the nitrogen-activating catalyst is a nitrogen-activating catalyst having a structure represented by any one of the following formulae: 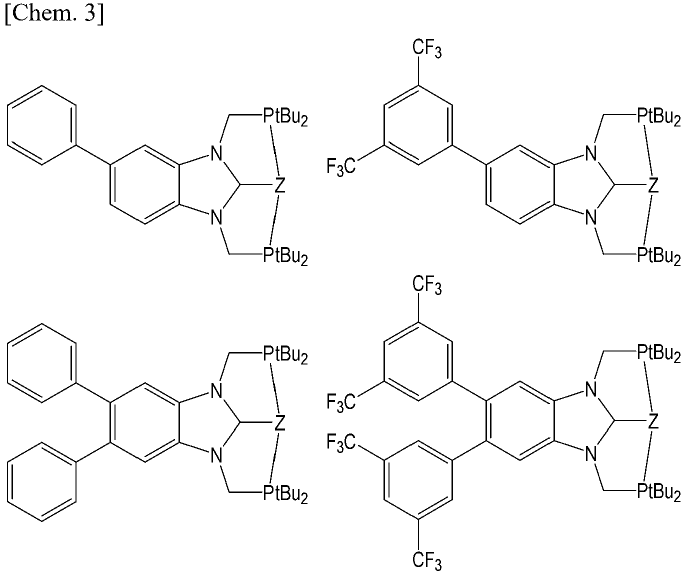 wherein Z is the same as that described above, and tBu represents a tert-butyl group.

8. An apparatus for producing a nitrogen-containing compound by the production method of any one of claims 1 to 7, the apparatus comprising the nitrogen-activating catalyst.
